# EUROPEAN PATENT APPLICATION

(11) **EP 4 175 221 A1**
(43) Date of publication of application: **03.05.2023**
(21) Application number: 21833197.3
(22) Date of filing: 29.06.2021
(51) Int. Cl.: H04L 9/40

(54) **METHOD FOR ACCESSING NETWORK, MEDIA GATEWAY, ELECTRONIC DEVICE, AND STORAGE MEDIUM**

(30) Priority: 29.06.2020 CN 202010607277
(71) Applicant: ZTE Corporation, Shenzhen, Guangdong 518057 (CN)
(72) Inventor: LIU, Bo, Shenzhen, Guangdong 518057 (CN)
(74) Representative: Osterhoff, Utz
(86) International application number: PCT/CN2021/103194
(87) International publication number: WO 2022/002069

(57) **Abstract**

Embodiments of the present application relate to the field of communications, and provide a method for accessing a network, a media gateway, an electronic device and a storage medium. The present application provides a method for accessing a network, applied to a media gateway, including: establishing a private media channel between a client and a target platform; and binding the private media channel to a user public network transmission resource corresponding to the client, and obtaining a media link between the client and the target platform to perform media communication between the target platform and the client via the media link; the user public network transmission resource is obtained after converting a local transmission resource of the client by a network address translation (NAT) device.

## Description

### CROSS-REFERENCE TO RELATED APPLICATIONS

This application claims priority to Chinese Patent Application No. 202010607277.6, filed on June 29, 2020, the entire contents of which are incorporated herein by reference.

### TECHNICAL FIELD

Embodiments of the present application relate to the technical field of communications, in particular to a method for accessing a network, a media gateway, an electronic device and a storage medium.

### BACKGROUND

As the development of internet technology, the peer-to-peer (P2P) communication becomes more and more common. In order to alleviate the lack of IPv4 network addresses before IPv6 is widely used, the network address translation (NAT) devices are widely used, which makes it difficult for nodes in different intranets to communicate directly with each other, and limits the development of P2P applications. NAT traversal technology allows nodes in different intranets to communicate directly via some technical means. Common NAT traversal techniques include session traversal utilities for NAT (STUN), traversal using relays around NAT (TURN), and so on.

However, the current STUN traversal technology does not support symmetric NAT traversal and has limitations, while TURN requires additional devices, such as a TURN server, which leads to increased network costs and is not scalable.

### SUMMARY

Embodiments of the present application provide a method for accessing a network, applied to a media gateway, including: establishing a private media channel between a client and a target platform; and binding the private media channel to a user public network transmission resource corresponding to the client, and obtaining a media link between the client and the target platform to perform media communication between the target platform and the client via the media link; wherein the user public network transmission resource is obtained after converting a local transmission resource of the client by a network address translation (NAT) device.

Embodiments of the present application further provide a method for accessing a network, applied to a client, including: running a preset browser to communicate with a signaling gateway via the browser, or, the client communicating with a media gateway via the browser; and establishing real-time media communication with an idle seat of a target platform via the browser in response that a media link between the client and the target platform is constructed completely.

Embodiments of the present application further provide a media gateway, including: at least one processor; and a memory communicated with the at least one processor; the memory stores instructions executable by the at least one processor, the instructions are executed by the at least one processor to enable the at least one processor to perform the method for accessing the network applied to the media gateway.

Embodiments of the present application further provide an electronic device, including: at least one processor; and a memory communicated with the at least one processor; the memory stores instructions executable by the at least one processor, the instructions are executed by the at least one processor to enable the at least one processor to perform the method for accessing the network.

Embodiments of the present application further provide a computer readable storage medium, the computer readable storage medium stores a computer program, the computer program when executed by a processor implements the method for accessing the network as described above.

### BRIEF DESCRIPTION OF THE DRAWINGS

One or more embodiments are illustrated exemplarily by the accompanying drawings, and these exemplary illustrations do not constitute a limitation of the embodiments.
FIG. 1 is a flowchart of a method for accessing a network according to a first embodiment of the present application.
FIG. 2 is a flowchart of the method for accessing the network according to a second embodiment of the present application.
FIG. 3 is an interaction diagram of the method for accessing the network according to a third embodiment of the present application.
FIG. 4 is a schematic structural diagram of a media gateway according to a fourth embodiment of the present application.
FIG. 5 is a schematic structural diagram of an electronic device according to a fifth embodiment of the present application.

### DETAILED DESCRIPTION OF THE EMBODIMENTS

In order to make the purpose, technical solutions and advantages of the embodiments of the present application clearer, each embodiment of the present application will be described in detail below in conjunction with the drawings. However, it will be understood by those skilled in the art that in the various embodiments of the present application, many technical details are presented to enable the reader to better understand the present application. However, even without various variations and modifications based on each of the following embodiments and these technical details, the technical solutions protected by the present application can be realized. The following embodiments are divided for the convenience of description and shall not constitute any limitation to the specific manner of the present application, and the embodiments may be combined and referenced to each other without contradicting each other.

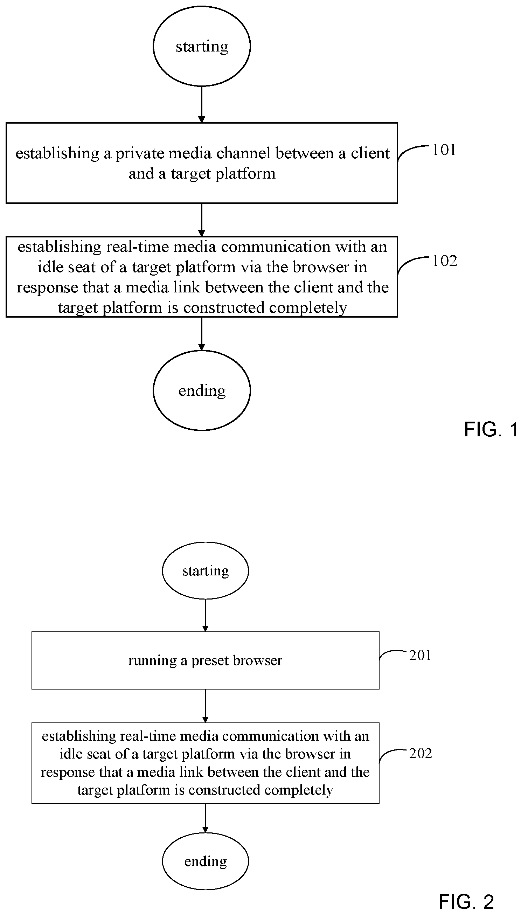

The first embodiment of the present application relates to a method for accessing a network, the process of which is shown in FIG. 1.

Operation 101: establishing a private media channel between a client and a target platform.

Operation 102: binding the private media channel to a user public network transmission resource corresponding to the client, and obtaining a media link between the client and the target platform to perform media communication between the target platform and the client via the media link, wherein the user public network transmission resource is obtained after converting a local transmission resource of the client by a network address translation (NAT) device.

Compared to the prior art, in the embodiment of the present application, the media gateway establishes a private media channel between the client and the target platform, binds the private media channel to the user public network transmission resource corresponding to the client, and obtains a media link between the client and the target platform to perform media communication between the target platform and the client via the media link. The media gateway binds the user public network transmission resources to the private media channel, so that the target platform can be informed of the user public network transmission resources and can send data to the client via the media link. In media communication, it is usually necessary to set up a media gateway to forward the media data, and establish a media link for the client and the target platform via the media gateway without deploying additional equipment or changing the network structure, to reduce the difficulty and cost of network deployment, and the client has corresponding user gateway transmission resources, i.e., the client has independent public transmission resources, such that the client can obtain a media link for communication even if it is in a NAT symmetric network, the limitation of the client to access the network is relieved.

The second embodiment of the present application relates to a method for accessing the network, applied to the client, the flowchart of which is shown in FIG. 2.

Operation 201: running a preset browser to communicate with a signaling gateway via the browser, or, the client communicating with a media gateway via the browser;

Operation 202: establishing real-time media communication with an idle seat of a target platform via the browser in response that a media link between the client and the target platform is constructed completely.

In the method for accessing the network provided by the embodiment, a preset browser is run to communicate with the signaling gateway or with the media gateway via the browser. In the case where the media link between the client and the target platform is established, real-time media communication is established with the idle seat of the target platform via the browser, and since there is no need to install a specific application or a specific component to achieve access to the network, the cost of real-time media communication with the target platform and the limitation of real-time media communication are reduced, and the scope of using real-time media is expanded.

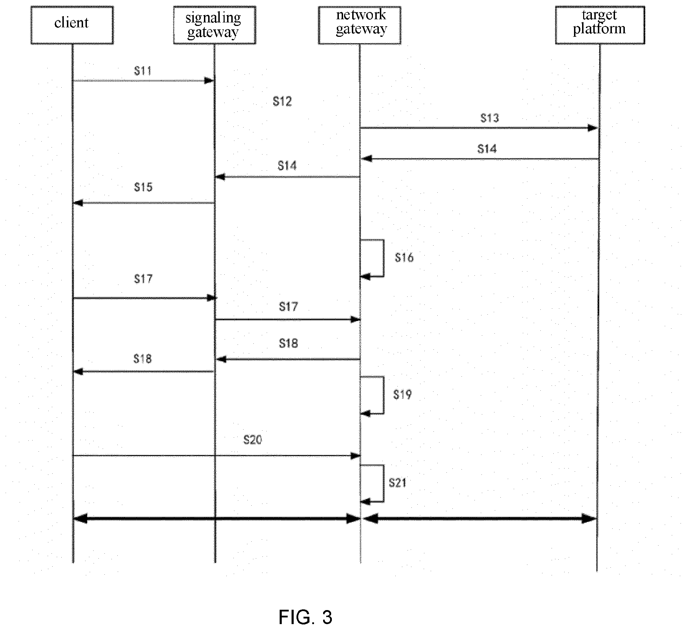

In order to better understand the first and second embodiments, the specific process of the method for accessing the network will be described in detail in the following third embodiment in conjunction with the FIG. 3, which shows the interaction diagram of accessing the network.

The client performs operation S11: sending the user media negotiation information of the client to the signaling gateway.

The client can be a smartphone, a personal computer (PC), a PAD, a VR device, etc. In the embodiment, the devices involved in the process of accessing the network at the client include: a signaling gateway, a media gateway, a client, and a target platform. The signaling gateway is communicated with the media gateway and the media gateway is communicated with the target platform. The target platform includes different functions of services including: media servers and other service servers, etc.

In the embodiment, the client runs a preset browser to communicate with the signaling gateway via the browser, or, the client communicates with the media gateway via the browser. In case that the media link between the client and the target platform is constructed completely, real-time media communication is established with an idle seat of the target platform via the browser.

The server of the preset browser is deployed on the public network, and the browser is used to provide call services to the client and assist the client in NAT traversal. The server of the browser establishes a heartbeat connection with the signaling gateway, so that the browser can communicate with the signaling gateway at any time. The client runs the browser, and the server of the browser provides a display page to the terminal. The user can operate the display page to trigger the browser to initiate a real-time media call to the media server. The signaling gateway can be a real-time media signaling gateway. For example, a call control is displayed on the page displayed on the client, and the user clicks on the call control to trigger the browser to initiate a real-time media call to the media server, and the browser can also provide other ways to initiate the real-time media call, which are not listed in this embodiment.

After the browser initiates a real-time media call, the browser obtains user media negotiation information of the client and initiates a media negotiation request to the media server. The user media negotiation information includes: the media capability supported by the client and parameter information. The media capability supported by the client is the media type supported by the client, such as: the media type supported by the client for video, the media type supported by the client for voice, etc., and the parameter information such as: sampling rate, resolution, etc. The client sends the user media negotiation information to the signaling gateway via the browser.

The client runs a browser, which makes real-time media calls and realizes accessing the media server at any time since the browser does not need to be downloaded.

The client can also initiate media negotiation to the media gateway via the specified application.

The signaling gateway performs operation S12: sending the user media negotiation information to the media gateway.

The media gateway performs operation S13: forwarding user media negotiation information to the target platform in response to the user media negotiation information of the client sent by a signaling gateway.

The media gateway performs operation S14: forwarding target media negotiation information to the signaling gateway in response to the target media negotiation information sent by the target platform.

The media server in the target platform receives the user media negotiation information and sends the target media negotiation information of the media server to the media gateway, and the target media negotiation information includes the media capabilities supported by the media server and parameter information. The media gateway sends the target media negotiation information to the signaling gateway.

The signaling gateway performs operation S15: sending the target media negotiation information to the client to complete media negotiation between the client and the target platform.

The client receives the target media negotiation information forwarded by the signaling gateway via the browser to enable the media negotiation with the target platform.

The media gateway performs operation S16: establishing a private media channel between the client and the target platform.

In one example, a target private media communication port is allocated to the target platform and a user private media communication port is allocated to the client; a mapping relationship between the target private media communication port and the user private media communication port is established to form the private media channel.

After the user completes media negotiation with the target platform, the media gateway will create a call session, allocate a target private media communication port to the target platform and a user private media communication port to the user. The target private media communication port can be a media communication UDP port allocated by the media gateway to the media server, and the user private media communication port can be a media communication UDP port allocated by the media gateway to the client. The media gateway establishes a mapping relationship between the target private media communication port and the user private media communication port to form a private media channel. For example, the media gateway can allocate a media communication UDP port, port1, to the user in real time, and also allocate a media communication UDP port, port2, to the media server of the target platform, and establishes a mapping relationship between port1 and port2, the mapping relationship is associated with the created session. Then, when the session is conducted, the data sent by the media server will flow in from port2 and out from port1 via the mapping relationship.

The client performs operation S17: sending a NAT packet to the media gateway.

The NAT packet can be a STUN packet, and the client sends the STUN packet to the media gateway via the browser, so that the media gateway can obtain the user public network transmission resources of the client. The user public network transmission resources include a NAT public network address and a NAT public network media port corresponding to the NAT public network address.

It can be understood that the client itself is within the internal network, and when the client accesses the public network, it converts the private network address to the public network address of the NAT device and the public network media port of the NAT device via the NAT device, and accesses the public network via the converted public network address and the public network media port of the NAT device. The NAT public network address in the embodiment is the public network address and the public network media port obtained after converting the private network address of the client by the NAT device.

The media gateway performs operation S18: obtaining the NAT public network address and the NAT public network media port in response to a NAT packet sent by the client; and returning the NAT public network address and the NAT public network media port to the client.

The network environment is complex, and the client may exist in a variety of network environments, if the user is in the intranet network, the public network is accessed via the NAT device, if the user is behind a two-level NAT device, the public network is accessed via the NAT device; if the client needs real-time media communication, NAT traversal is required, i.e., the client needs to be informed of the converted public network address and port.

When the media gateway receives the NAT packets from the client, that is, it can obtain the NAT public network address and NAT public network media port of the client. The NAT public network address and NAT public network media port of the client are returned to the client, and the client receives the NAT public network address and NAT public network media port and can send and receive media packets with the media server.

The media gateway performs operation S19: binding the NAT public network media port to the user private media communication port to form a media link.

The NAT public network media port is bound to the user private media communication port to form a media link. The media link is: the private network media port at the client - the NAT public network media port of the client - the user private media communication port - the target private media communication port --media port of the media server.

The media server can send media data to the client via the media link and realize real-time media communication with the client.

The client performs operation S20: initiating dtls negotiation to the media gateway.

The media gateway performs operation S21: performing a packet transport layer security protocol dtls negotiation with the client in response to a dtls negotiation request initiated by the client.

In order to ensure the security of the media link, the client sends a packet transport layer security protocol dtls negotiation request to the media gateway, and performs dtls negotiation with the client in response to the packet transport layer security protocol dtls negotiation request initiated by the client, to realize the encryption function of the media link and provide the security of the media link.

The media link is shown as the bold bidirectional arrow in FIG. 3, and after the media link is established, the target platform executes initiating a call to the client and waiting for an idle seat.

After the media link is established, the service center of the target platform initiates a session initiation protocol (SIP) call to the client and waits for the idle seat. In response to the SIP call, the client establishes a real-time media call with the idle seat via the media link.

In the method for accessing the network in the example, a media link between the client and the target platform is established via the media gateway, and after the media link is established, the media link is encrypted to improve the security of the media link. In addition, the client communicates with the media gateway by running a browser to establish the media link, such that the user needn't to download additional applications at the client, the cost of real-time media communication between the client and the target platform is reduced, and the browser is highly portable, the use scenario of real-time media communication is improved.

In addition, those skilled in the art can understand that the above division of the steps of various methods is only for the purpose of clear description, and can be combined into one step or decomposed some steps into multiple steps, as long as they include the same logical relationship, they are all within the scope of the patent; adding insignificant modifications to the algorithm or process or introducing insignificant design, but not changing its algorithm and the core design of the process is within the scope of the patent.

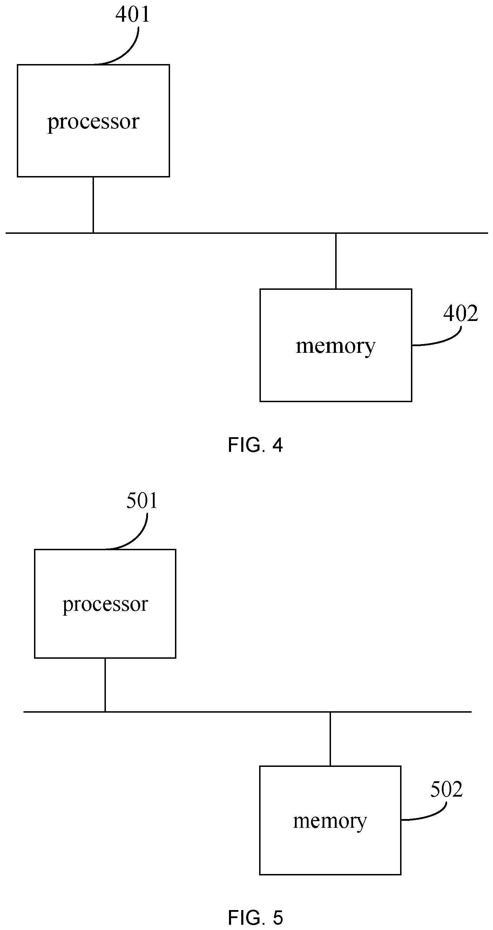

A fourth embodiment of the present application relates to a media gateway having the structure shown in FIG. 4, including: at least one processor 401; and a memory 402 communicated with the at least one processor 401. The memory 402 stores instructions executable by the at least one processor 401, the instructions are executed by the at least one processor 401 to enable the at least one processor 401 to perform the method for accessing the network described above.

A fifth embodiment of the present application relates to an electronic device having the structure shown in FIG. 5, including: at least one processor 501; and a memory 502 communicated with the at least one processor 501. The memory 502 stores instructions executable by the at least one processor 501, the instructions are executed by the at least one processor 501 so as to enable the at least one processor 501 to perform the method for accessing the network described above.

The memory and the processor are connected using a bus, and the bus may include any number of interconnected buses and bridges, and the bus connects various circuits of one or more processors and the memory together. The bus may also connect together various other circuits such as peripherals, voltage regulators, and power management circuits, which are well known in the art and therefore will not be further described herein. The bus interface provides an interface between the bus and the transceiver. The transceiver may be a single element or a plurality of elements, such as a plurality of receivers and transmitters, providing units for communicating with various other devices on a transmission medium. Data processed by the processor is transmitted on the wireless medium via an antenna, and further, the antenna also receives the data and transmits it to the processor.

The processor is responsible for managing the bus and the usual processing, and may also provide various functions including timing, a peripheral interface, voltage regulation, power management, and other control functions, and memory may be used to store data used by the processor in performing operations.

A sixth embodiment of the present application relates to a computer readable storage medium, which stores a computer program. The computer program is executed by the processor to implement the method for accessing the network described above.

That is, it is understood by those skilled in the art that all or some of the steps in the method of the above embodiments can be accomplished by a program instructing the relevant hardware. The storage medium stored in a storage medium includes a number of instructions to cause a device (which may be a microcontroller, chip, etc.) or a processor to perform all or some of the steps of the method described in the various embodiments of the present application. The above storage media include: a USB flash drive, a mobile hard disk, a read-only memory (ROM), a random access memory (RAM), disk or CD-ROM, and other media that can store program code.

Those skilled in the art can understand that the above embodiments are specific embodiments for realizing the present application, and in practical application, various changes can be made to them in form and details without deviating from the scope of the present application.

## Claims

1. A method for accessing a network, applied to a media gateway, **characterized by** comprising:
establishing a private media channel between a client and a target platform; and
binding the private media channel to a user public network transmission resource corresponding to the client, and obtaining a media link between the client and the target platform to perform media communication between the target platform and the client via the media link;
wherein the user public network transmission resource is obtained after converting a local transmission resource of the client by a network address translation (NAT) device.

2. The method for accessing the network according to claim 1, wherein the establishing the private media channel between the client and the target platform comprises:
allocating a target private media communication port to the target platform and a user private media communication port to the client; and
establishing a mapping relationship between the target private media communication port and the user private media communication port to form the private media channel.

3. The method for accessing the network according to claim 2, wherein the user public network transmission resource comprises a NAT public network address and a NAT public network media port corresponding to the NAT public network address;
wherein the binding the private media channel to the user public network transmission resource corresponding to the client, and obtaining the media link between the client and the target platform to perform media communication between the target platform and the client via the media link comprises:
binding the NAT public network media port to the user private media communication port to form the media link.

4. The method for accessing the network according to claim 3, wherein before the binding the NAT public network media port to the user private media communication port to form the media link, the method further comprises:
obtaining the NAT public network address and the NAT public network media port in response to a NAT packet sent by the client; and
returning the NAT public network address and the NAT public network media port to the client.

5. The method for accessing the network according to any one of claims 1 to 4, wherein after the binding the private media channel to the user public network transmission resource corresponding to the client, obtaining the media link between the client and the target platform, the method further comprises:
performing a packet transport layer security protocol dtls negotiation with the client in response to a dtls negotiation request initiated by the client.

6. The method for accessing the network according to any one of claims 1 to 4, wherein before the establishing the private media channel between the client and the target platform, the method further comprises:
forwarding user media negotiation information to the target platform in response to the user media negotiation information of the client sent by a signaling gateway;
forwarding target media negotiation information to the signaling gateway in response to the target media negotiation information sent by the target platform; and
the signaling gateway sending the target media negotiation information to the client to complete media negotiation between the client and the target platform;
wherein the client communicates with the signaling gateway via a browser or with the media gateway via a browser.

7. A method for accessing a network, applied to a client, **characterized by** comprising:
running a preset browser to communicate with a signaling gateway via the browser, or, the client communicating with a media gateway via the browser; and
establishing real-time media communication with an idle seat of a target platform via the browser in response that a media link between the client and the target platform is constructed completely.

8. A media gateway, **characterized by** comprising:
at least one processor; and
a memory communicated with the at least one processor;
wherein the memory stores instructions executable by the at least one processor, the instructions are executed by the at least one processor to enable the at least one processor to perform the method for accessing the network according to any one of claims 1 to 6.

9. An electronic device, **characterized by** comprising:
at least one processor; and
a memory communicated with the at least one processor;
wherein the memory stores instructions executable by the at least one processor, the instructions are executed by the at least one processor to enable the at least one processor to perform the method for accessing the network according to claim 7.

10. A computer readable storage medium, **characterized in that** the computer readable storage medium stores a computer program, the computer program when executed by a processor implements the method for accessing the network according to any one of claims 1 to 6, or implements the method for accessing the network according to claim 7.
